# EUROPÄISCHE PATENTSCHRIFT

(11) **EP 0 506 802 B1**
(45) Veröffentlichungstag und Bekanntmachung des Hinweises auf die Patenterteilung: **22.09.1993**
(21) Anmeldenummer: 91901781.4
(22) Anmeldetag: 20.12.1990
(51) Int. Cl.: G01N 3/04

(54) **SPANNVORRICHTUNG FÜR HOCHFESTE FADEN- ODER BANDFÖRMIGE MATERIALIEN**
CLAMPING DEVICE FOR HIGH-STRENGTH FILAMENTARY OR RIBBON-SHAPED MATERIALS
DISPOSITIF DE SERRAGE DE MATERIAUX EN FILAMENTS OU EN BANDES DE HAUTE RESISTANCE

(30) Priorität: 20.12.1989 DE 3942111; 19.04.1990 DE 4012444
(43) Veröffentlichungstag der Anmeldung: 07.10.1992
(73) Patentinhaber: TEXTECHNO HERBERT STEIN GMBH & CO: KG, D-41066 Mönchengladbach (DE)
(72) Erfinder: MÖRSCHEL, Alex, D-4050 Mönchengladbach 1 (DE); STEIN, Wolfgang, D-4050 Mönchengladbach 2 (DE)
(74) Vertreter: Dallmeyer, Georg, Dipl.-Ing.
(86) Internationale Anmeldenummer: EP9002260
(87) Internationale Veröffentlichungsnummer: WO9109294

(56) Entgegenhaltungen:
- DE-B- 1 139 302
- DE-B- 1 194 175

## Beschreibung

Die Erfindung betrifft eine Spannvorrichtung nach dem Oberbegriff des Hauptanspruchs.

Derartige Spannvorrichtungen werden beispielsweise benötigt, um faden- oder bandförmige Materialien einer Zugspannung auszusetzen, indem über die beiden Spannklemmen der Spannvorrichtungen durch Bewegen der einen Spannklemme relativ zu der anderen eine Längenänderung des zwischen zwei Einspannstellen verlaufenden Materialabschnittes und dadurch bedingt eine Zugspannung erzeugt wird.

Ein wichtiges Einsatzgebiet derartiger Spannvorrichtungen sind Zugversuche an faden- oder bandförmigen Materialien, z.B. auch Drähten, zur Feststellung der Höchstzugkraft, der Höchstzugkraftdehnung sowie des Verlaufs der Kraft-/Dehnungskurve.

Für diese Zugversuche werden bevorzugt automatische mikroprozessorgesteuerte Zugprüfgeräte eingesetzt.

Bei der Zugprüfung hochfester Materialien kann dabei das Problem entstehen, daß infolge der hohen Zugkräfte und der deswegen notwendigen hohen Klemmkraft vermehrt sogenannte Klemmenbrüche unmittelbar an den Spannklemmen auftreten, die in der statistischen Auswertung der Versuchsreihen nicht berücksichtigt werden sollen, da sie in der Regel zu niedrige Höchstzugkraft- und -dehnungswerte ergeben. Wird zur Vermeidung von Klemmenbrüchen die Spannkraft der Spannklemmen reduziert, besteht die Gefahr eines Durchrutschens des Materials durch die Spannbacken. Der Zugversuch muß dann abgebrochen werden.

Es ist bekannt (s.Firmenprospekt der Firma Textechno: "Automatisches Zugprüfgerät STATIMAT M"), Spannklemmen vorzusehen, die einen zylindrischen Umlenkkörper aufweisen, der von dem zu prüfenden Material um ca. 360° umschlungen wird, bevor das Material in die Spannklemme geführt wird, um einen Teil der in der Prüfstrecke herrschenden Zugkräfte abzubauen. Es ist ferner eine andere gattungsgemäße Spannklemme bekannt (DE-PS 1 194 175), die einen Umlenkkörper mit kontinuierlich von der Klemme zur Prüfstrecke hin zunehmendem Krümmungsradius besitzt, der vom Material unter einem Winkel von ca. 270° umschlungen wird.

Bei derartigen Spannklemmen muß das zu prüfende Material manuell um die Umlenkkörper gewickelt und in die Spannklemme eingeführt werden. Solche Spannklemmen eignen sich folglich nicht für eine automatische Zugprüfung. Hinzukommt, daß die Umschlingung um Umlenkkörper mit gleichsinniger Krümmung zu einer einseitigen Beanspruchung des Materials, insbesondere bei dicken Proben, und damit zu einer inhomogenen Spannungsverteilung über den Probenquerschnitt führt.

Es sind ferner Spannvorrichtungen bekannt, die vor den Spannklemmen den Materialabschnitt um 90° auf einem Reibkörper umlenken. Bei diesen Spannklemmen ist ein automatisches Einführen des Materials, wenn auch mit einem komplizierten Bewegungsablauf des Einführungsorgans, möglich. Andererseits reicht die Zugkraftreduzierung wegen des relativ kleinen Umschlingungswinkels bei vielen Materialien, insbesondere solchen mit hoher Festigkeit und/oder sehr glatter Oberfläche, nicht aus.

Bei einer anderen bekannten Spannvorrichtung an einem Zugprüfgerät (DE-OS 17 98 359) speziell für hochdehnbare Fäden wird die Probe allein durch Reibung an Umlenkkörpern gehalten, die an den beiden Enden der Prüfstrecke angeordnet sind. Die Einführung der Probe ist hier besonders umständlich und nicht automatisierbar.

Aus der DE-OS 25 13 109 ist eine Vorrichtung zur Durchführung des Streckversuches zur Auffindung von Doppelungen an Blechen bekannt, wobei Blechstreifenproben über auswechselbare Ziehdorne in einem Ziehwerkzeug gezogen werden. Dabei werden die Blechstreifenproben von einem Spannkopf durch die Ziehdorne hindurchgezogen, indem sich die Ziehdorne relativ zu dem feststehenden Spannkopf bewegen. Die Ziehdorne dienen nicht dazu, die auf die Spannklemmen einwirkende Zugkraft zu reduzieren; im Gegenteil, durch das Hindurchziehen der Blechstreifenproben durch die Ziehdorne wird die Zugkraft an den Spannklemmen erhöht.

Der Erfindung liegt daher die Aufgabe zugrunde, bei einer Spannvorrichtung der eingangs genannten Art die auf die Spannklemmen einwirkende Zugkraft erheblich zu verringern und das automatische Einführen der Prüfprobe gleichzeitig zu erleichtern.

Zur Lösung dieser Aufgabe dient erfindungsgemäß eine Spannvorrichtung, insbesondere für Zugprüfgeräte, mit zwei Spannklemmen zum Einspannen von hochfesten faden- oder bandförmigen Materialien und Übertragen einer Zugkraft in einen zwischen zwei Einspannstellen verlaufenden Materialabschnitt, wobei jede Einspannstelle aus einer Spannklemme und mindestens zwei relativ zu der Spannklemme feststehend oder feststellbar angeordneten Umlenkkörpern besteht, und der eingespannte Materialabschnitt im Bereich vor jeder Spannklemme durch die Umlenkkörper gegenläufig umgelenkt wird, bei der mindestens ein Umlenkkörper unabhängig von der Funktion der Spannklemme derart beweglich ist, daß der Materialabschnitt in einer ersten Endstellung des Umlenkkörpers geradlinig in der Einspannebene verläuft und in einer zweiten Endstellung des Umlenkkörpers mehrfach umlenkbar ist, und daß der bewegliche Umlenkkörper in der zweiten Endstellung verriegelbar ist.

Die mehrfache gegensinnige Umlenkung des zu prüfenden Materials reduziert die auf die Spannklemmen einwirkende Zugkraft schrittweise durch die an den Umlenkkörpern entstehenden Reibkräfte, die der Zugkraft entgegenwirken. Die reduzierte, von den Spannklemmen aufzunehmende Zugkraft verringert die Möglichkeit des Rutschens der Probe in den Spannklemmen und weiterhin die Gefahr von Klemmenbrüchen, da die Anpreßkraft der Spannklemmen reduziert werden kann. Dabei ist mindestens ein Umlenkkörper beweglich angeordnet, so daß das Material in einer ersten Endstellung des Umlenkkörpers geradlinig in der Einspannebene verläuft und in einer zweiten Endstellung zwei- oder mehrfach umgelenkt wird. Auf diese Weise ist es möglich, die Spannvorrichtung bei einer automatischen Prüfmaschine zu verwenden, und den Einspannvorgang zwischen die Spannklemmen bei Stellung des beweglichen Umlenkkörpers in der ersten Endstellung in besonders einfacher Weise geradlinig zu gestalten. Dabei kann jede Spannklemme erst dann geschlossen werden, wenn der bewegliche Umlenkkörper in seiner zweiten Endstellung ist.

Dadurch, daß der der Spannklemme benachbarte, relativ zu ihr feststehende Umlenkkörper mit seiner Mantelfläche die durch die Spannklemme definierte Einspannebene berührt, ist gewährleistet, daß das Material geradlinig in die Einspannebene einläuft und im Bereich vor der jeweiligen Spannklemme exakt geführt ist, was sich ebenfalls positiv auf die Gefahr von Klemmenbrüchen auswirkt.

Bei einer Weiterbildung der Erfindung ist vorgesehen, daß mindestens ein Umlenkkörper gemeinsam mit einem Gegenstück in Form einer Hilfsklemme das Material mit im Vergleich zur Spannklemme reduziertem Anpreßdruck klemmt.

Die Verwendung der Umlenkkörper als Hilfsklemmen kann die von den Spannklemmen aufzunehmende Zugkraft in erheblichem Umfang reduzieren, so daß äußerst hohe Zugkräfte auf das zu prüfende Material übertragen werden können.

Die federbelasteten Gegenstücke können den Materialabschnitt mit unterschiedlichen, dem zu prüfenden Material angepaßten Vorspannungen klemmen, indem die Federn auswechselbar eingesetzt werden können. Dabei kann das Gegenstück hinsichtlich seiner Klemmfläche der Krümmung der Mantelfläche des beweglichen Umlenkkörpers angepaßt sein. Auf diese Weise ist die Klemmfläche auf dem Umlenkkörper vergrößert, so daß höhere Kräfte aufgenommen werden können.

Bei einem bevorzugten Ausführungsbeispiel sind drei Umlenkkörper vorgesehen, wobei die Mantelflächen der jeweils äußeren Umlenkkörper an die Einspannebene angrenzen.

Eine Weiterbildung sieht vor, daß die von dem zu prüfenden Material umschlungenen Mantelflächen der Umlenkkörper einen unterschiedlichen Krümmungsradius, und zwar zur Spannklemme hin einen abnehmenden Krümmungsradius aufweisen. Durch die unterschiedlichen Durchmesser der Umlenkkörper wird die auf die Spannklemmen wirkende Zugkraft stufenweise abgebaut, wobei jeder Umlenkkörper einen unterschiedlichen Anteil übernimmt.

Der von der Spannklemme entfernteste Umlenkkörper weist den größten Durchmesser auf, um an der Stelle der höchsten Zugbeanspruchung den Biegeradius möglichst groß zu halten und dadurch die Bruchgefahr an dieser Stelle zu verringern.

Dabei können auch die von dem zu prüfenden Materialabschnitt umschlungenen Mantelflächen der Umlenkkörper jeweils einen progressiv zur Spannklemme hin abnehmenden Krümmungsradius aufweisen. Auf diese Weise wird ein stufenloser Übergang zu kleineren Biegeradien ermöglicht.

Bei einer vorteilhaften Weiterbildung ist vorgesehen, daß eine Kolben-Zylinder-Einheit den oder die beweglichen Umlenkkörper verlagert, wobei der Druckzylinder der Kolben-Zylinder-Einheit das Druckmedium für die Spannklemmen erst in der zweiten Endstellung des beweglichen Umlenkkörpers freigibt. Bei diesem Ausführungsbeispiel werden die Spannklemmen erst dann geschlossen, wenn der bewegliche Umlenkkörper sich in der zweiten Endstellung befindet, d.h. das zu prüfende Material umgelenkt ist. Eine spezielle Steuerung für den beweglichen Umlenkkörper kann dabei entfallen.

Andererseits kann auch vorgesehen sein, daß die Kolben-Zylinder-Einheit den beweglichen Umlenkkörper unabhängig von der Spannklemmenbetätigung verlagert. Dies ist beispielsweise dann notwendig, wenn Zugversuche ohne Umlenkung des zu prüfenden Materials erfolgen sollen.

Der Kolben der Kolben-Zylinder-Einheit für den beweglichen Umlenkkörper treibt eine den beweglichen Umlenkkörper tragende Schubstange an, wobei ein an der Schubstange befestigtes Hebelgelenkgetriebe Zustell- oder Rückstellkräfte auf eine quer zur Schubstange bewegliche und in dieser gelagerten Sperrklinke derart überträgt, daß die Sperrklinke beim Anliegen der Zustellkraft und Erreichen der zweiten Endstellung des beweglichen Umlenkkörpers in eine Ausnehmung eingreift und beim Anliegen der Rückstellkraft die Sperrklinke aus der Ausnehmung herausgezogen wird. Die Sperrklinke ist notwendig, damit während des Zugversuches der bewegliche Umlenkkörper nicht zurückgedrückt werden kann. Die Sperrklinke wird allein durch die die Schubstange antreibenden Kräfte betätigt, wodurch ein separater Antrieb und eine separate Steuerung für die Sperrklinke entfallen kann. Während die Schubstange auf Grund einer Vorschubkraft des Kolbens der Kolben-Zylinder-Einheit vorwärts bewegt wird, wird gleichzeitig die quer zur Bewegungsrichtung wirkende Sperrklinke zunächst gegen die Schubstangenführung gedrückt, bis die zweite Endposition des beweglichen Umlenkkörpers erreicht ist. In dieser Position befindet sich in der Schubstangenführung eine Ausnehmung, in die die Sperrklinke einrasten kann. Beim Anliegen einer Rückstellkraft auf die Schubstange, wird über das Hebelgelenkgetriebe die Sperrklinke aus der Ausnehmung herausgezogen und anschliessend die Schubstange zurückbewegt.

Die Mantelfläche des der jeweiligen Spannklemme benachbarten Umlenkkörpers kann in die Einspannfläche des ortsfesten Spannklemmenteils stufenlos übergehen.

Die Mantelfläche der Umlenkkörper kann mit einer im Querschnitt V-förmigen Rille versehen sein, in der der Materialabschnitt verläuft. Die Rille erlaubt bei faden- oder drahtförmigen Materialien eine Führung des zu prüfenden Materials, erhöht in vorteilhafter Weise die Reibung zwischen Material und Umlenkkörper und trägt dadurch zur Reduzierung der von den Spannklemmen aufzunehmenden Zugkraft bei.

Zwischen den Umlenkkörpern können Sensoren angeordnet sein, die einen Materialbruch im Bereich vor der Spannklemme überwachen. Mit Hilfe der Sensoren ist es möglich, Zugversuche bei der statistischen Auswertung auszuschließen, bei denen ein Materialbruch im Bereich unmittelbar vor den Spannklemmen bzw. im Bereich der Umlenkkörper aufgetreten ist.

Bei einem weiteren Ausführungsbeispiel ist vorgesehen, daß die Kolben-Zylinder-Einheit für die Spannklemmen mit ihrer Längsachse parallel zur Einspannebene und orthogonal zum eingespannten Material verläuft.

Ferner kann ein von dem Kolben angetriebenes Hebelgetriebe die Kolbenkraft verstärkt auf den beweglichen Spannklemmenteil überträgt. Mit Hilfe der Hebelübersetzung des Hebelgetriebes läßt sich bei kleiner Bauweise der Kolben-Zylinder-Einheit eine erhebliche Kraftverstärkung für die Anpreßkraft der Spannklemmen erzielen.

Eine bevorzugte Weiterbildung sieht vor, daß die beiden Klemmbacken jeder Einspannklemme den Anpreßdruck zwischen den Klemmbacken so beeinflussen, daß er auf der der Prüfstrecke zugewandten Seite der Einspannklemme am geringsten ist und entlang der zwischen den Klemmbacken gehaltenen Prüfprobe in die Einspannklemme hinein kontinuierlich zunimmt. Auf diese Weise wird auch bei hohen Klemmdrücken ein Abquetschen der Prüfprobe an den Kanten der Klemmbacken vermieden.

Ein Ausführungsbeispiel der Erfindung sieht vor, daß die Flächen der beiden Klemmbacken um zur Längsachse der Prüfprobe und zur Richtung der Anpreßkraft zwischen den Klemmbacken orthogonale Achsen kontinuierlich und zueinander geringfügig konvex gekrümmt sind. Alternativ können auch eine Klemmbacke mit gekrümmter und eine mit planer Oberfläche miteinander kombiniert werden. Durch diese Formgebung bildet sich beim Schließen der Einspannklemme ein Spalt zwischen den Klemmbacken, der auf der der Prüfstrecke zugewandten ebenso wie auf der abgewandten Seite der Einspannklemme jeweils am größten ist und zur Mitte der Klemmbacken hin kontinuierlich abnimmt. Entsprechend der abnehmenden Spaltbreite ist die Quetschbeanspruchung der Prüfprobe auf der der Prüfstrecke abgewandten Seite der Einspannklemme gering oder Null. Zur Mitte der Klemmbacken hin verstärkt sich die Klemmung der Prüfprobe und erreicht dort ihr Maximum. Eine intensive Klemmung findet daher nur über einen Teilbereich der Klemmbackenlänge statt. Dies hat auch den Vorteil, daß bei einer gegebenen Anpreßkraft der Anpreßdruck zwischen den Klemmbacken im Bereich der intensiven Klemmung wesentlich höher als bei Spannklemmen mit Klemmbacken mit planer Oberfläche gleicher Länge und Breite und gleicher Anpreßkraft ist.

Der Krümmungsradius der gebogenen Klemmbackenoberfläche bzw. die Größe des gebildeten Spaltes wird zweckmäßig entsprechend der Dicke, der Deformierbarkeit und der Reißdehnung der Prüfprobe gewählt. Zum Beispiel hat sich für Garne im Titerbereich 500 - 2000 dtex eine Spaltbreite von 0,5 mm auf der der Prüfstrecke zugewandten Seite der Einspannklemme als zweckmäßig erwiesen.

Eine Weiterbildung sieht vor, daß beide Klemmbacken der Einspannklemme eine plane Oberfläche haben, und daß eine der Klemmbacken auf der der Prüfstrecke zugewandten Seite zwei beidseitig zur Prüfprobe angeordnete Distanzstücke besitzt, zwischen denen ausreichend Platz für den Durchtritt der Prüfprobe besteht. Mindestens eine der beiden Klemmbacken ist so drehbar oder schwimmend gelagert, daß sie sich entsprechend der einseitig angebrachten Distanzstücke unter einem geringen Neigungswinkel gegen die andere Klemmbacke anlegen kann. Durch die Distanzstücke ergibt sich ein keilförmiger Spalt zwischen den Klemmbacken, der auf der der Prüfstrecke zugewandten Seite der Einspannklemme am größten ist, und zur anderen Seite der Einspannklemme kontinuierlich bis auf die Stärke des dort geklemmten Materials abnimmt. Mit abnehmender Spaltbreite erhöht sich der Klemmdruck auf die eingespannte Prüfprobe bis zu einem Maximum auf der von der Prüfstrecke abgewandten Seite der Einspannklemme.

Eine vorteilhafte Weiterbildung der Erfindung sieht vor, daß die beiden Klemmbacken der Einspannklemme plane Oberflächen haben, und daß zwei an verschiedenen Stellen der Klemmbacken angreifende Mechanismen zur Krafteinleitung unterschiedlich hohe Anpreßkräfte aufbringen.

Bei einem bevorzugten Ausführungsbeispiel werden die beiden Klemmbacken durch zwei getrennte Druckkolben mit unterschiedlicher Druckkraft aneinandergepreßt, wobei der stärkere Druckkolben nahe der von der Prüfstrecke abgewandten Seite und der schwächere Druckkolben nahe der der Prüfstrecke zugewandten Seite an der einen Klemmbacke angreift. Auf diese Weise wird,die,Prüfprobe einem über die Klemmbackenlänge kontinuierlich veränderlichen Klemmdruck unterworfen, der auf der der Prüfstrecke zugewandten Seite der Einspannklemme am kleinsten und auf der abgewandten Seite am größten ist. Entsprechend der unterschiedlichen Verformung der Prüfprobe durch die unterschiedlichen Klemmkräfte bildet sich auch hier ein keilförmiger, zur Prüfstrecke hin größer werdender Spalt zwischen den beiden Klemmbacken aus.

Im folgenden werden unter Bezugnahme auf die Zeichnungen Ausführungsbeispiele der Erfindung näher erläutert.

Es zeigen
- Fig.1: eine Spannvorrichtung einer automatischen Zugprüfmaschine mit eingeführtem Prüfmaterial und geöffneten Spannklemmen,
- Fig.2: die Spannvorrichtung mit geschlossenen Spannklemmen und mehrfach umgelenktem Material,
- Fig.3: eine Kolben-Zylinder-Einheit für eine Spannklemme mit einem Hebelgetriebe zur Verstärkung der Spannkraft der Spannklemme,
- Fig.4: ein Ausführungsbeispiel mit einem Antrieb für den beweglichen Umlenkkörper, der zugleich eine Sperrklinke betätigt,
- Fig.5: eine Darstellung entsprechend Fig.4, bei der sich der bewegliche Umlenkkörper in seiner zweiten Endstellung befindet,
- Fig.6: ein Ausführungsbeispiel einer Spannklemme mit Hilfsklemme,
- Fig.7: ein alternatives Ausführungsbeispiel zu Fig.6,
- Fig. 8 und 9: weitere Ausführungsbeispiele beweglicher Umlenkkörper,
- Fig. 10: eine Spannvorrichtung eines Zugprüfgerätes mit den beiden Einspannklemmen im geschlossenen Zustand, sowie mit Klemmbacken mit gekrümmter Oberfläche und mit der eingeführten Prüfprobe,
- Fig. 11a: eine Klemmbacke mit planer Oberfläche und mit Distanzstücken,
- Fig. 11b: eine Einspannklemme mit Klemmbacken mit planer Oberfläche, von denen die eine Distanzstücke besitzt, und
- Fig. 12: eine Einspannklemme mit zwei getrennten Kolben/Zylinder-Einheiten.

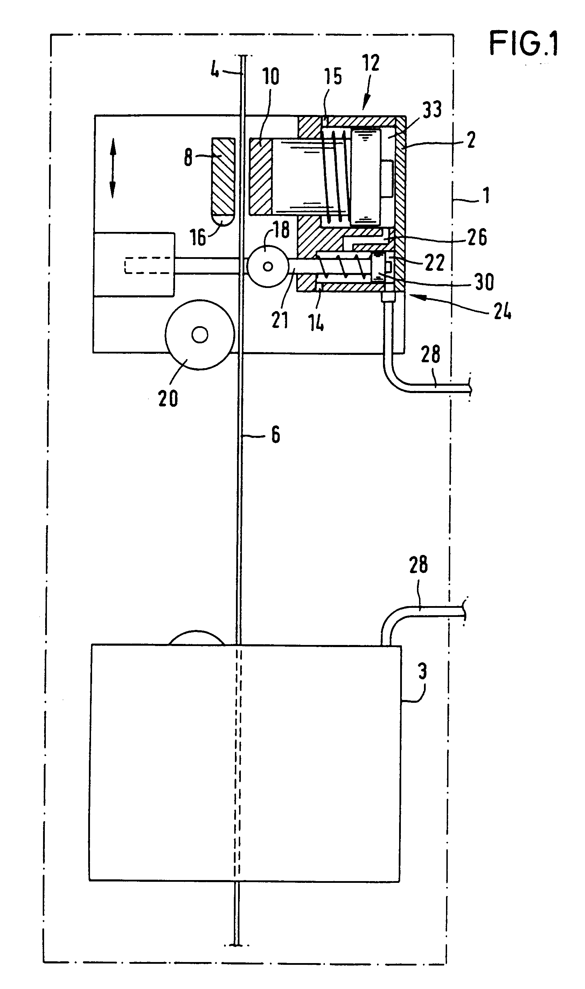

Ein bevorzugtes Anwendungsgebiet der in Fig.1 gezeigten Spannvorrichtung sind Zugversuche, z.B. in automatischen Zugprüfgeräten, in denen faden- oder drahtförmige, aber auch bandförmige Materialien hinsichtlich Höchstzugkraft, Höchstzugkraftdehnung usw. untersucht werden können.

Die Spannvorrichtung 1 besteht im wesentlichen aus zwei Spannklemmen 2,3, von denen mindestens eine zur Durchführung des Zugversuches beweglich ist, und eine in Verbindung mit einer Kraftmeßdose steht.

Bei der in Fig.1 gezeigten Spannvorrichtung 1 wird das zu prüfende Material 4 mit Hilfe geeigneter Führungseinrichtungen in die von den Spannklemmen 2,3 definierte Einspannebene vertikal eingeführt. Zwischen den Spannklemmen 2,3 ist dann der zu prüfende Materialabschnitt 6 angeordnet, der während des Zugversuches über die Spannklemmen 2,3 zunehmend gedehnt wird, wodurch entsprechend der Kraft-Dehnungscharakteristik eine anwachsende Zugkraft entsteht.

Die Spannklemmen 2,3 bestehen jeweils aus einem unbeweglichen Spannklemmenteil 8 und einem beweglichen Spannklemmenteil 10, der vorzugsweise von einer pneumatisch betätigten Kolben-Zylinder-Einheit 12 bewegt wird.

Die Spannklemmenteile 8,10 können an ihren Spannflächen mit einem Belag oder einer Beschichtung versehen sein, die in hohem Maße verschleißfest ist und einen hohen Reibwert besitzt.

Die Spannklemmen 2,3 sind ferner mit je einer Umlenkvorrichtung aus drei Umlenkkörpern 16,18,20 versehen. Die Umlenkkörper 18,20 bestehen jeweils aus Rundbolzen unterschiedlichen Durchmessers, deren Mittelachse horizontal und parallel zur Einspannebene verläuft. Die Mantelfläche der Umlenkkörper kann zumindest im Umschlingungsbereich verschiedene Oberflächenstrukturen aufweisen. Bei einem nicht dargestellten Ausführungsbeispiel besteht die Umlenkvorrichtung nur aus zwei Umlenkkörpern 16,18.

Bei einem in den Zeichnungen nicht dargestellen Ausführungsbeispiel können die Umlenkkörper 18,20 mit ihren Längsachsen auch orthogonal zur Einspannebene verlaufen, wenn faden- oder drahtförmige Materialien zu prüfen sind.

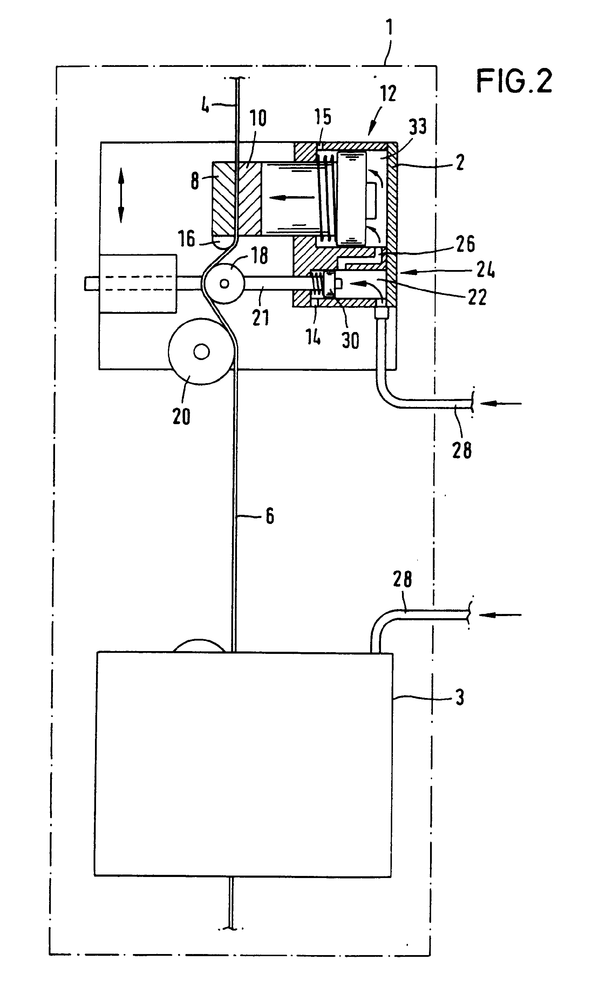

Der den Spannklemmen 2,3 benachbarte Umlenkkörper 16 ist bei dem Ausführungsbeispiel der Figuren 1 und 2 direkt an dem unbeweglichen Spannklemmenteil 8 angeformt und weist eine im querschnitt halbkreisförmige Kontur auf.

Der Krümmungsradius der Mantelfläche des Umlenkkörpers 20 ist gegenüber dem des Umlenkkörpers 18 und dieser wiederum gegenüber dem des Umlenkkörpers 16 vergrößert, so daß der zu prüfende Materialabschnitt 6 in Richtung auf die Spannklemmen 2,3 hin von insgesamt drei Umlenkkörpern 20,18,16 mit abnehmendem Krümmungsradius der Mantelflächen umgelenkt wird.

Der mittlere Umlenkkörper 18 ist, wie aus den Figuren 1 und 2 ersichtlich, horizontal und orthogonal zur Einspannebene beweglich, wobei er in einer ersten, in Fig.1 gezeigten Endstellung den Materialabschnitt 6 nicht berührt und in der in Fig.2 gezeigten Endstellung, bei der auch die Spannklemmen 2,3 geschlossen sind, den Materialabschnitt 6 derart umlenkt, daß auch die Umlenkkörper 16 und 20 von dem Materialabschnitt 6 teilweise umschlungen sind. Die Umlenkkörper 16 und 20 sind relativ zur Spannvorrichtung feststehend angeordnet, wobei ihre Mantelflächen an der von dem unbeweglichen Spannklemmenteil 8 definierten Einspannebene anliegen.

Der bewegliche Umlenkkörper 18 wird von einer pneumatischen Kolben-Zylinder-Einheit angetrieben und ist unmittelbar auf der Kolbenstange befestigt. Die Zylinderkammer 22 dieser Kolben-Zylinder-Einheit 24 ist mit einem Überströmkanal 26 versehen, der die über die Leitung 28 zugeführte Druckluft erst dann in die Kolben-Zylinder-Einheit 12 leitet, wenn sich der Kolben 30 mit dem Umlenkkörper 18 in seiner zweiten Endstellung befindet. Die Zylinderkammer 22 ist an dem kolbenstangenseitigen Ende mit einer Entlüftungsöffnung 14 versehen.

Die Kolben-Zylinder-Einheit 24 kann aber - in den Zeichnungen nicht dargestellt - auch separat von der Kolben-Zylinder-Einheit 12 gesteuert werden, um auch Zugversuche ohne Einsatz der Umlenkkörper 16,18,20 zu ermöglichen.

Abweichend von den Darstellungen in den Figuren 1,2,6 und 7 kann der bewegliche Umlenkkörper 18 statt in einer linearen Vorschubbewegung auch über eine Schwenkbewegung in seine zweite Endstellung gebracht werden.

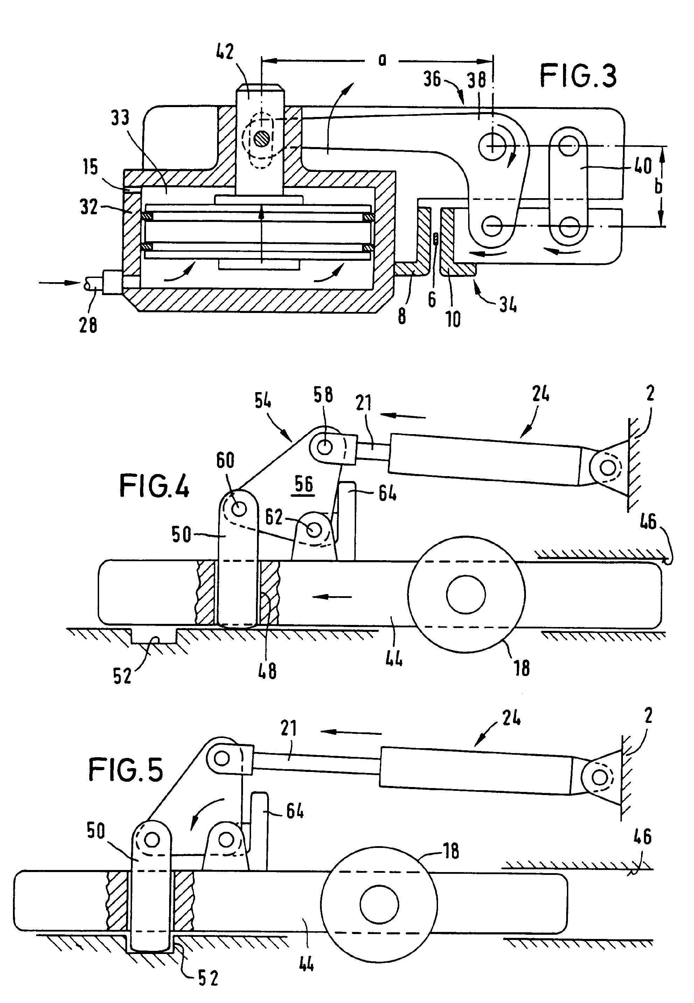

Fig. 3 zeigt ein alternatives Ausführungsbeispiel für eine von einer Kolben-Zylinder-Einheit 3 2 betätigten Spannklemme 3 4. Ein Hebelgetriebe 3 6, bestehend aus einem Kniehebel 38 und einem Parallellenker 40, überträgt die von dem Kolben 42 ausgeübte Kraft auf den beweglichen Spannklemmenteil 10 mit einem Verstärkungsfaktor, der dem Hebelverhältnis a : b entspricht. Die Zylinderkammer 33 der Kolben-Zylinder-Einheit 32 ist am spannklemmenseitigen Ende mit einer Entlüftungsöffnung 15 versehen.

Der Parallellenker 40 gewährleistet dabei die Parallelität der Spannflächen der Spannklemmenteile 8 und 10.

Fig. 4 zeigt ein Ausführungsbeispiel eines Antriebs für den beweglichen Umlenkkörper 18. Der Umlenkkörper 18 ist dabei auf einer Schubstange 44 befestigt, die in einer Führung 46 im Ausführungsbeispiel horizontal und quer zur Einspannebene bewegt werden kann.

Die Schubstange 44 ist an geeigneter Stelle mit einem einer Sperrklinke 50 angepaßten Durchbruch 48 versehen, die, wie aus Fig. 5 ersichtlich, in der zweiten Endstellung des beweglichen Umlenkkörpers 18 in eine in der Führung 46 vorgesehene Ausnehmung 52 eingreifen kann. Hierzu ist vorgesehen, daß die Kolben-Zylinder-Einheit 24 über ein Hebelgetriebe mit der Schubstange 44 und mit der Sperrklinke 50 verbunden ist derart, daß bei der Zustellbewegung der Kolbenstange 21 die Sperrklinke gegen die Führung 46 gedrückt wird, während gleichzeitig die Schubstange 44 vorbewegt wird, so daß in der zweiten Endstellung des beweglichen Umlenkkörpers 18 die Sperrklinke 50 in die Ausnehmung 52 eingreifen kann, während bei der Rückbewegung der Kolbenstange 21 die Sperrklinke 50 zunächst aus der Ausnehmung 52 herausgezogen wird. Das hierfür benötigte Hebelgetriebe 54 besteht aus einem Kniehebel oder einer Platte 56 mit drei Gelenkpunkten 58,60,62. Der Gelenkpunkt 58 ist mit dem freien Ende der Kolbenstange 21 gelenkig verbunden, während der Gelenkpunkt 60 mit dem freien Ende der Sperrklinke 50 gelenkig verbunden ist. Der Gelenkpunkt 62 ist gelenkig an der Schubstange 44 befestigt und bildet zugleich den Drehpunkt für die Platte 56.

Die Sperrklinke 50 kann auch unabhängig durch einen eigenen Antrieb, z.B. eine Kolben-Zylinder-Einheit, bewegt werden (nicht dargestellt).

An dem Gelenkpunkt 62 kann in geeigneter Weise ein Anschlag für die Platte 56 vorgesehen sein, der das Herausziehen der Sperrklinke 50 begrenzt, wenn die Sperrklinke 50 aus der Ausnehmung 52 heraus ist. Der Anschlag 64 kann auch an anderer geeigneter Stelle vorgesehen sein.

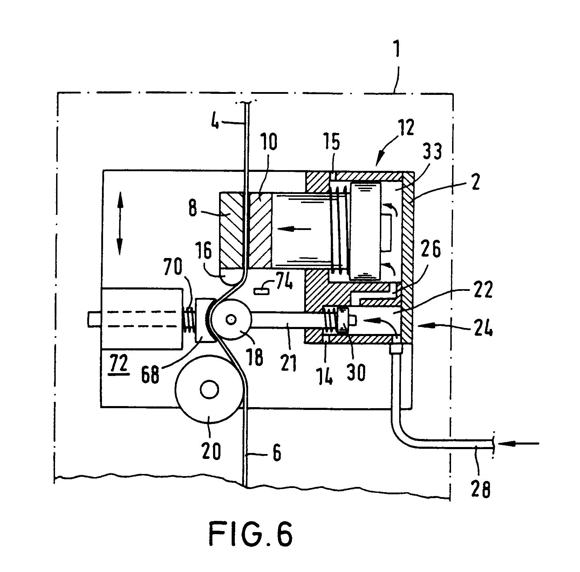

Fig. 6 zeigt ein Ausführungsbeispiel, bei dem der bewegliche Umlenkkörper 18 in seiner zweiten Endstellung den Materialabschnitt 6, eine Hilfsklemme bildend, gegen ein Gegenstück 68 drückt, das über eine Feder 70 vorgespannt ist und sich in einer auf der Montageplatte 72 befestigten Halterung abstützt. Das Gegenstück 68 ist hinsichtlich seiner Kontur im Spannflächenbereich dem beweglichen Umlenkkörper 18 angepaßt. Je nach Vorspannung der Feder 70 kann - gegebenenfalls an das jeweilige Material angepaßt - eine unterschiedliche Klemmkraft erzeugt werden. Die Feder 70 kann zu diesem Zweck ausgewechselt werden.

Im Bereich zwischen dem Umlenkkörper 16 und dem beweglichen Umlenkkörper 18 kann ein Materialbruchsensor 74 angeordnet sein, der überwacht, ob ein Materialbruch in dieser Zone, d.h. in unmittelbarer Nähe der Spannklemme 18, auftritt, wodurch solche Zugversuche von der statistischen Auswertung ausgeschlossen werden können.

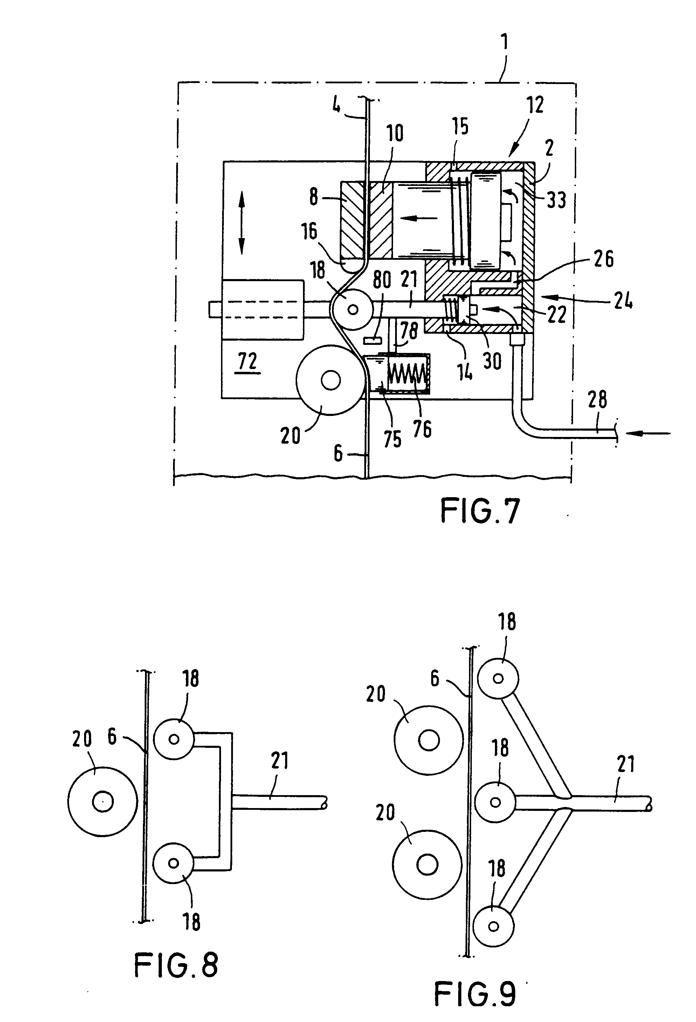

Fig. 7 zeigt eine weitere Möglichkeit der Anordnung eines beweglichen Gegenstücks 75 zu einem Umlenkkörper, das ebenfalls hinsichtlich seiner Spannflächenkontur dem Umlenkkörper 20 angepaßt ist. Dabei umschließt die Spannfläche genau wie bei dem Ausführungsbeispiel der Fig. 6 den Umschlingungsbereich des Materialabschnitts 6 auf dem Umlenkkörper 20. Das Gegenstück 75 ist wiederum über eine gegebenenfalls auswechselbare Spannfeder 76 abgestützt, die in einer mit der Schubstange 21 verbundenen Halterung 78 angeordnet ist. Auf diese Weise ist die Bewegung der Hilfsklemme an die Bewegung des beweglichen Umlenkkörpers 18 gekoppelt.

Die Hilfsklemmen können auch mit einem eigenen Antrieb versehen sein.

Bei dem Ausführungsbeispiel der Fig. 7 ist ein Materialbruchsensor 80 im Bereich zwischen den Umlenkkörpern 18 und 20 angeordnet.

Die Materialbruchsensoren 74,80 können auch in den Ausführungsbeispielen der Figuren 1 und 2 vorgesehen sein.

Die Figuren 8 und 9 zeigen weitere Ausführungsbeispiele für bewegliche Umlenkkörper 18. So ist es möglich, daß die Schubstange 21 auch mehrere bewegliche Umlenkkörper 18 gleicher oder unterschiedlicher Größe trägt, die mit ortsfesten Umlenkkörpern 20, die an die Einspannebene angrenzen, zusammenwirken.

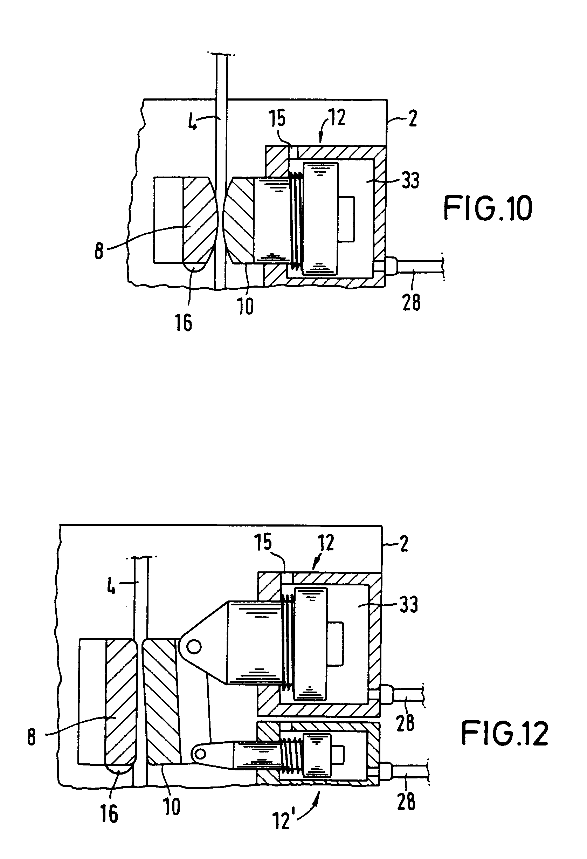

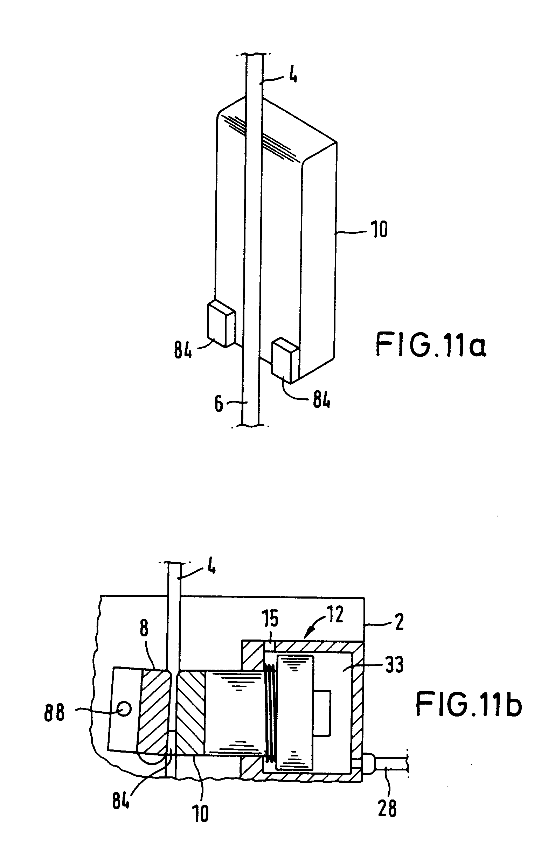

Bei der in Fig. 10 gezeigten Spannvorrichtung wird die Prüfprobe 4 in die von den Spannklemmen 2,3 vorgegebene Einspannebene vertikal eingeführt. Der zwischen den beiden Einspannklemmen befindliche Abschnitt der Probe definiert die Prüfstrecke 6. Dieser Abschnitt wird während des Zugversuchs durch Bewegung mindestens einer der beiden Einspannklemmen 2,3 gedehnt, wodurch entsprechend der Kraft/Dehnungs-Charakteristik des Materials eine anwachsende Zugkraft entsteht.

Die Einspannklemmen 2,3 bestehen jeweils aus einem unbeweglichen Teil mit der Klemmbacke 8 und einem beweglichen Teil mit der Klemmbacke 10, der vorzugsweise von einer pneumatisch betätigten Kolben/Zylinder-Einheit 12 bewegt wird. Die Klemmbacken 8,10 besitzen Oberflächen, die um zur Längsachse der Prüfprobe und zur Richtung der Anpreßkraft zwischen den Klemmbacken orthogonale Achsen kontinuierlich und zueinander konvex gekrümmt sind. Die Oberflächen können mit einem Belag oder einer Beschichtung versehen sein, der bzw. die in hohem Maße verschleißfest ist und einen hohen Reibwert besitzt.

Fig. 11a zeigt eine Klemmbacke 10 mit planer Oberfläche und zwei Distanzstücken 84, zwischen denen sich die Prüfprobe 4 befindet.

Fig. 11b zeigt die Einspannklemme 2 in geschlossenem Zustand mit einer Klemmbacke 10 mit zwei Distanzstücken und einer zweiten Klemmbacke 8 mit planer Oberfläche, die um die horizontale orthogonal zum Material 4 verlaufende Achse 88 drehbar gelagert ist, so daß sich beim Schließen der Einspannklemme durch Verdrehen der Einspannklemme 8 zwischen den beiden Klemmbacken ein konischer Spalt bildet.

Fig. 12 zeigt ein weiteres Ausführungsbeispiel einer Einspannklemme 2 mit zwei Klemmbacken 8,10 mit planer Oberfläche und mit zwei Kolben/Zylinder-Einheiten 12,12', von denen die stärkere 12 nahe der von der Prüfstrecke abgewandten Seite und die schwächere 12' nahe der der Prüfstrecke zugewandten Seite der Klemmbacke 10 mit dieser gelenkig verbunden sind.

## Patentansprüche

1. Spannvorrichtung, insbesondere für Zugprüfgeräte, mit zwei Spannklemmen (2, 3) zum Einspannen von hochfesten faden- oder bandförmigen Materialien und Übertragen einer Zugkraft in einen zwischen zwei Einspannstellen verlaufenden Materialabschnitt (6), wobei jede Einspannstelle aus einer Spannklemme (2, 3) und mindestens zwei relativ zu der Spannklemme (2, 3) feststehend oder feststellbar angeordneten Umlenkkörpern (16, 18, 20) besteht, und der eingespannte Materialabschnitt (6) im Bereich vor jeder Spannklemme durch die Umlenkkörper gegenläufig umgelenkt wird,
**dadurch gekennzeichnet**,
daß mindestens ein Umlenkkörper (18) unabhängig von der Funktion der Spannklemme (2, 3) derart beweglich ist, daß der Materialabschnitt (6) in einer ersten Endstellung des Umlenkkörpers (18) geradlinig in der Einspannebene verläuft und in einer zweiten Endstellung des Umlenkkörpers (18) mehrfach umlenkbar ist, und daß der bewegliche Umlenkkörper (18) in der zweiten Endstellung verriegelbar ist.

2. Spannvorrichtung nach Anspruch 1, dadurch gekennzeichnet, daß der der jeweiligen Spannklemme (2, 3) benachbarte Umlenkkörper (16) relativ zur Spannklemme (2, 3) feststehend derart angeordnet ist, daß die Mantelfläche des Umlenkkörpers (16) an die durch die Klemmflächen der jeweiligen Spannklemme (2, 3) definierte Einspannebene angrenzt.

3. Spannvorrichtung nach einem der Ansprüche 1 oder 2, dadurch gekennzeichnet, daß die feststehenden und/oder feststellbaren Umlenkkörper (18,20) gemeinsam mit einem Gegenstück (68,75) eine Hilfsklemme bilden, die den Materialabschnitt (6) mit im Vergleich zur Spannklemme (2,3) reduziertem Anpreßdruck klemmen.

4. Spannvorrichtung nach Anspruch 3, dadurch gekennzeichnet, daß das Gegenstück (68,75) federbelastet ist und daß die Feder (70,76) auswechselbar ist.

5. Spannvorrichtung nach einem der Ansprüche 3 oder 4, dadurch gekennzeichnet, daß das Gegenstück (68,75) hinsichtlich seiner Klemmfläche der Krümmung der umschlungenen Mantelfläche des gegenüberliegenden beweglichen oder feststehenden Umlenkkörpers (18,20) angepaßt ist.

6. Spannvorrichtung nach einem der Ansprüche 1 bis 5, dadurch gekennzeichnet, daß die Mantelflächen der feststehenden Umlenkkörper (16,20) an die Einspannebene angrenzen.

7. Spannvorrichtung nach einem der Ansprüche 1 bis 6, dadurch gekennzeichnet, daß die Umlenkkörper (16, 18,20) aus Bolzen bestehen, deren Längsachsen parallel zur Einspannebene und orthogonal zu dem eingespannten Materialabschnitt (6) verlaufen.

8. Spannvorrichtung nach einem der Ansprüche 1 bis 7, dadurch gekennzeichnet, daß die von dem Materialabschnitt (6) umschlungenen Mantelflächen der Umlenkkörper (16,18,20) einen unterschiedlichen Krümmungsradius, und zwar zu den jeweiligen Spannklemmen (2,3) hin einen abnehmenden Krümmungsradius, aufweisen oder daß die umschlungenen Mantelflächen der Umlenkkörper (16,18,20) jeweils einen progressiv zu den Spannklemmen (2,3) hin abnehmenden Krümmungsradius aufweisen.

9. Spannvorrichtung nach einem der Ansprüche 1 bis 8, dadurch gekennzeichnet, daß eine Kolben-Zylinder-Einheit (24) den oder die beweglichen Umlenkkörper (18) verlagert, wobei der Druckzylinder (22) der Kolben-Zylinder-Einheit (24) das Druckmedium für die Spannklemmen (2,3) erst in der zweiten Endstellung des beweglichen Umlenkkörpers (18) freigibt.

10. Spannvorrichtung nach Anspruch 9, dadurch gekennzeichnet, daß die Kolbenstange (21) der Kolben-Zylinder-Einheit (24) eine den beweglichen Umlenkkörper (18) tragende Schubstange (44) antreibt, wobei ein an der Schubstange (44) befestigtes Hebelgelenkgetriebe (54) Zustell- oder Rückstellkräfte auf eine quer zur Schubstange (44) bewegliche und in dieser gelagerte Sperrklinke (50) derart überträgt, daß die Kolbenstange (21) die Sperrklinke (50) beim Anliegen der Zustellkraft und Erreichen der zweiten Endstellung des beweglichen Umlenkkörpers (18) in eine Ausnehmung (52) hineindrückt und beim Anliegen der Rückstellkraft die Sperrklinke (50) aus der Ausnehmung (52) herauszieht.

11. Spannvorrichtung nach einem der Ansprüche 1 bis 10, dadurch gekennzeichnet, daß die Mantelflächen der Umlenkkörper (16,18,20) mit einer im Querschnitt V-förmigen Rille versehen sind, in der der Materialabschnitt (6) verläuft.

12. Spannvorrichtung nach einem der Ansprüche 1 bis 11, dadurch gekennzeichnet, daß zwischen den Umlenkkörpern (16,18,20) angeordnete Sensoren einen Materialbruch im Bereich vor der jeweiligen Spannklemme (2,3) überwachen.

13. Spannvorrichtung nach einem der Ansprüche 1 bis 12, dadurch gekennzeichnet, daß die Kolben-Zylinder-Einheit (12) für jede Spannklemme (2,3) über ein von dem Kolben (42) angetriebenes Hebelgetriebe (36) die Kolbenkraft verstärkt auf den beweglichen Spannklemmenteil (10) überträgt.

14. Spannvorrichtung nach einem der Ansprüche 1 bis 13, dadurch gekennzeichnet, daß die beiden Klemmbacken (8,10) jeder Einspannklemme (2,3) auf den zwischen ihnen befindlichen Abschnitt der Prüfprobe (4) einen Klemmdruck ausüben, der, ausgehend von der der Prüfstrecke (6) zugewandten Seite der Einspannklemmen entlang der Klemmbackenlänge kontinuierlich zunimmt.

15. Spannvorrichtung nach Anspruch 14, dadurch gekennzeichnet, daß die Oberflächen der beiden Klemmbacken (8,10) um zur Längsachse der Prüfprobe und zur Richtung der Anpreßkraft zwischen den beiden Klemmbacken orthogonale Achsen kontinuierlich und zueinander konvex gekrümmt sind.

16. Spannvorrichtung nach Anspruch 14, dadurch gekennzeichnet, daß die beiden Klemmbacken (8,10) eine plane Oberfläche haben, und daß die eine Klemmbacke (22) auf der der Prüfstrecke zugewandten Seite Distanzstücke (84) besitzt, und eine der beiden Klemmbacken drehbar oder schwimmend gelagert ist.

17. Spannvorrichtung nach Anspruch 14, dadurch gekennzeichnet, daß zwei voneinander unabhängige Kolben/Zylinder-Einheiten (12,30) mit unterschiedlicher Druckstärke an zwei Stellen der Klemmbacke (23) gelenkig so befestigt sind, daß die niedrigere Anpreßkraft nahe der der Prüfstrecke (6) zugewandten Seite und die höhere Anpreßkraft nahe der von der Prüfstrecke (6) abgewandten Seite der Klemmbacken (8,10) eingeleitet wird.

## Claims

1. A clamping device, in particular for tensile testing machines, comprising two clamps (2,3) for gripping high-strength filamentary or ribbon-shaped materials and for transmitting a tensile force to a material section (6) between two clamping positions, each clamping position consisting of a clamp (2,3) and at least two deflecting bodies (16,18,20) being arranged fixedly or fixably relative to said clamp (2,3), and said gripped material section (6) being deflected in the opposite direction in the area in front of each clamp by means of said deflecting bodies,
**characterized in**
that at least one deflecting body (18) is movable independently of the function of said clamp (2,3) such that the material section (6), in a first end position of said deflecting body (18), extends linearly in the clamping plane, and, in a second end position of said deflecting body (18), is deflectable several times, and in that said movable deflecting body (18) can be locked in the second end position.

2. A clamping device according to claim 1, characterized in that the deflecting body (16) adjacent to the respective clamp (2,3) is fixedly arranged relative to said clamp (2,3) such that the jacket surface of said deflecting body (16) is adjacent to the clamping plane defined by the clamping surfaces of the respective clamp (2,3).

3. A clamping device according to one of claims 1 or 2, characterized in that the fixed and/or fixable deflecting bodies (18,20) form, in combination with a counterpart (68,75), an auxiliary clamp which clamps said material section (6) with reduced contact pressure in comparison with said clamp (2,3).

4. A clamping device according to claim 3, characterized in that said counterpart (68,75) is spring-loaded, and in that said spring (70,76) is exchangeable.

5. A clamping device according to one of claims 3 or 4, characterized in that said counterpart (68,75) is adapted to the curvature of the contacted jacket surface of said opposite movable or fixed deflecting body (18,20) with respect to its clamping surface.

6. A clamping device according to one of claims 1 to 5, characterized in that the jacket surfaces of said fixed deflecting bodies (16,20) are adjacent to said clamping plane.

7. A clamping device according to one of claims 1 to 6, characterized in that said deflecting bodies (16,18,20) consist of pins the longitudinal axes of which extend parallel to the clamping plane and orthogonally to said clamped material section (6).

8. A clamping device according to one of claims 1 to 7, characterized in that said jacket surfaces of said deflecting bodies (16,18,20) contacted by said material section (6) have a different radius of curvature which decreases towards the respective clamps (2,3), or in that the contacted jacket surfaces of said deflecting bodies (16,18,20) respectively have a radius of curvature progressively decreasing towards said clamps (2,3).

9. A clamping device according to one of claims 1 to 8, characterized in that a piston/cylinder unit (24) displaces said movable deflecting body or bodies (18), the pressure cylinder (22) of said piston/cylinder unit (24) releasing the pressure medium for said clamps (2,3) when said movable deflecting body (18) is in the second end position.

10. A clamping device according to claim 9, characterized in that the piston rod (21) of said piston/cylinder unit (24) drives a push rod (44) supporting said movable deflecting body (18), a lever joint transmission (54) mounted to said push rod (44) transmitting feed or resetting forces in such a manner to a detent pawl (50) movable transversely to said push rod (44) and supported therein that said piston rod (21), upon application of the feed force and reaching of the second end position of said movable deflecting body (18), presses said detent pawl (50) into a recess (52), and, upon application of the resetting force, draws said detent pawl (50) out of said recess (52).

11. A clamping device according to one of claims 1 to 10, characterized in that said jacket surfaces of said deflecting bodies (16,18,20) are provided with a groove having a V-shaped cross section, in which groove said material section (6) extends.

12. A clamping device according to one of claims 1 to 11, characterized in that sensors arranged between said deflecting bodies (16,18,20) supervise a break of material in the area in front of the respective clamp (2,3).

13. A clamping device according to one of claims 1 to 12, characterized in that said piston/cylinder unit (12) transmits, for each clamp (2,3), the piston force in a reinforced manner to the movable clamp portion (10) via a lever transmission (36) driven by said piston (42).

14. A clamping device according to one of claims 1 to 13, characterized in that said the two clamping jaws (8,10) of each clamp (2,3) exert a clamping pressure on the section of the test sample arranged therebetween, which pressure continuously increases, starting from the side of the clamps facing the test section (6), along the length of the clamping jaws.

15. A clamping device according to claim 14, characterized in that the surfaces of said two clamping jaws (8,10) are curved continuously and convexly relative to each other around axes being orthogonal to the longitudinal axis of the test sample and the direction of the contact pressure between said two clamping jaws.

16. A clamping device according to claim 14, characterized in that said two clamping jaws (8,10) have a plane surface, and in that said one clamping jaw (22) comprises spacer members (84) on the side facing the test section, and that one of said two clamping jaws is turnably or floatingly supported.

17. A clamping device according to claim 14, characterized in that two piston/cylinder units (12,30) independently of each other with different pressure strength are hingedly mounted at two positions of said clamping jaw (23) such that the lower pressure force is introduced near the side facing said test section (6) and the higher pressure force near the side of said clamping jaws (8,10) facing away from said test section.

## Revendications

1. Dispositif de serrage, en particulier pour appareils d'essai de traction, à deux pinces de serrage (2, 3), pour le serrage de matériaux en filaments ou en bande de haute résistance et la transmission d'une force de traction à un tronçon de matériau (6) s'étendant entre deux points de serrage, chaque point de serrage se composant d'une pince de serrage (2, 3) et d'au moins deux éléments de renvoi (16, 18, 20) disposés de manière fixe ou à pouvoir être fixés par rapport à la pince de serrage (2, 3) et le tronçon de matériau serré (6) étant dévié en sens contraire par les éléments de renvoi dans la zone située avant chaque pince de serrage, caractérisé en ce qu'au moins un élément de renvoi (18) est mobile, indépendamment du fonctionnement de la pince de serrage (2, 3), de sorte que le tronçon de matériau (6) s'étend, dans une première position extrême de l'élément de renvoi (18), en ligne droite dans le plan de serrage et peut, dans une seconde position extrême de l'élément de renvoi (18), être dévié plusieurs fois et en ce que l'élément de renvoi (18) mobile peut être verrouillé dans la seconde position extrême.

2. Dispositif de serrage suivant la revendication 1, caractérisé en ce que l'élément de renvoi (16) adjacent à la pince de serrage (2, 3) concernée , est disposé de manière fixe par rapport à la pince de serrage (2, 3), de sorte que la surface d'enveloppe de l'élément de renvoi (16) est contiguë au plan de serrage défini par les surfaces de serrage de la pince de serrage (2, 3) concernée.

3. Dispositif de serrage suivant l'une des revendications 1 ou 2, caractérisé en ce que les éléments de renvoi fixes et/ou pouvant être fixés forment, conjointement avec une contre -pièce (68, 75), une pince auxiliaire qui serre le tronçon de matériau (6) avec une pression de poussée réduite en comparaison avec la pince de serrage (2, 3).

4. Dispositif de serrage suivant la revendication 3, caractérisé en ce que la contre-pièce (68, 75) est chargée par un ressort et que le ressort (70, 76) peut être échangé.

5. Dispositif de serrage suivant l'une des revendications 3 ou 4, caractérisé en ce que la contre-pièce (68, 75) est adaptée, quant à sa surface de serrage, à la courbure de la surface d'enveloppe enlacée de l'élément de renvoi mobile ou fixe opposé (18, 20).

6. Dispositif de serrage suivant l'une des revendications 1 à 5, caractérisé en ce que les surfaces d'enveloppe des éléments de renvoi fixes (16, 20) sont contiguës au plan de serrage.

7. Dispositif de serrage suivant l'une des revendications 1 à 6, caractérisé en ce que les éléments de renvoi (16, 18, 20) consistent en des boulons dont les axes longitudinaux s'étendent parallèlement au plan de serrage et orthogonalement au tronçon de matériau serré (6).

8. Dispositif de serrage suivant l'une des revendications 1 à 7, caractérisé en ce que les surfaces d'enveloppe des éléments de renvoi (16, 18, 20) enlacées par le tronçon de matériau (6) présentent un rayon de courbure différent, et notamment un rayon de courbure diminuant vers les pinces de serrage (2, 3) concernées, ou en ce que les surfaces d'enveloppe enlacées des éléments de renvoi (16, 18, 20) présentent, chacune, un rayon de courbure diminuant progressivement vers les pinces de serrage (2, 3).

9. Dispositif de serrage suivant l'une des revendications 1 à 8, caractérisé en ce qu'un ensemble cylindre - piston (24) déplace le ou les éléments de renvoi mobiles (18), le cylindre de pression (22) de l'ensemble cylindre - piston (24) ne libérant le fluide de pression pour les pinces de serrage (2, 3) que dans la seconde position extrême de l'élément de renvoi mobile (18).

10. Dispositif de serrage suivant la revendication 9, caractérisé en ce que la tige de piston (21) de l'ensemble cylindre - piston (24) entraîne une tige coulissante (44) portant l'élément de renvoi mobile (18), un engrenage articulé à levier (54) transmettant des forces d'avance et de rappel à un cliquet (50) pouvant se déplacer transversalement à la tige coulissance (44) et monté sur cette dernière, de telle manière que la tige de piston (21), lorsque la force d'avance est appliquée et que la seconde position extrême de l'élément de renvoi mobile (18) est atteinte, pousse le cliquet (50) dans un évidement (52) et que, lorsque la force de rappel est appliquée, retire le cliquet (50) de l'évidement (52).

11. Dispositif de serrage suivant l'une des revendications 1 à 10, caractérisé en ce que les surfaces d'enveloppe des éléments de renvoi (16, 18, 20) sont pourvues d'une gorge de section en forme de V dans laquelle passe le tronçon de matériau (6).

12. Dispositif de serrage suivant l'une des revendications 1 à 11, caractérisé en ce que des détecteurs disposés entre les éléments de renvoi (16, 18, 20) surveillent une rupture de matériau dans la zone située avant la pince de serrage (2, 3) concernée.

13. Dispositif de serrage suivant l'une des revendications 1 à 12, caractérisé en ce que l'ensemble cylindre - piston (12) pour chaque pince de serrage (2, 3) transmet la force de piston, par l'intermédiaire d'un mécanisme à levier entraîné par le piston (42), de manière amplifiée à l'élément de pince de serrage mobile (10).

14. Dispositif de serrage suivant l'une des revendications 1 à 13, caractérisé en ce que les deux mâchoires de serrage (8, 10) de chaque pince de serrage (2, 3) exercent, sur le tronçon de l'échantillon soumis à l'essai (4) situé entre elles, une pression de serrage qui augmente en continu sur la longueur de mâchoire de serrage, à partir du côté des pinces de serrage orienté vers le segment d'essai (6).

15. Dispositif de serrage suivant la revendication 14, caractérisé en ce que les surfaces des deux mâchoires de serrage (8, 10) sont courbées de manière convexe en continu et mutuellement autour d'axes orthogonaux à l'axe longitudinal de l'échantillon soumis à l'essai et à la direction de la force de poussée entre les deux mâchoires de serrage.

16. Dispositif de serrage suivant la revendication 14, caractérisé en ce que les deux mâchoires de serrage (8, 10) présentent une surface plane et que l'une (22) des mâchoires de serrage possède des entretoises (84) du côté orienté vers le segment d'essai et que l'une des deux mâchoires de serrage est montée de manière rotative ou flottante.

17. Dispositif de serrage suivant la revendication 14, caractérisé en ce que deux ensembles cylindre - piston (12, 30) indépendants l'un de l'autre, à force de poussée différente, sont fixés de manière articulée en deux points de la mâchoire de serrage (23), de manière telle que la force de poussée la plus faible est introduite près du côté orienté vers le segment d'essai (6) et que la force de poussée la plus élevée est introduite près du côté des mâchoires de serrage (8, 10) opposé au segment d'essai (6).
